(19) Europäisches Patentamt European Patent Office Office européen des brevets

(11) **EP 4 756 667 A1**

(12) **EUROPEAN PATENT APPLICATION**

(43) Date of publication:
**10.06.2026 Bulletin 2026/24**

(21) Application number: **25219665.4**

(22) Date of filing: **01.12.2025**

(51) International Patent Classification (IPC):
*G06F 40/284* (2020.01)    *G06F 40/35* (2020.01)
*G06N 3/02* (2006.01)    *G06N 3/08* (2023.01)
*G06F 40/268* (2020.01)    *G06F 40/216* (2020.01)

(52) Cooperative Patent Classification (CPC):
**G06F 40/284; G06F 40/35; G06N 3/02; G06N 3/08;
G06N 3/084; G06N 7/01; G06N 20/00;
G06F 40/216; G06F 40/268**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **04.12.2024 JP 2024211793**

(71) Applicant: **FUJITSU LIMITED
Kawasaki-shi, Kanagawa 211-8588 (JP)**

(72) Inventors:
• **YOKOTA, Takuya
  Kawasaki-shi, Kanagawa, 211-8588 (JP)**
• **NAKAO, Yuri
  Kawasaki-shi, Kanagawa, 211-8588 (JP)**

(74) Representative: **Hoffmann Eitle
Patent- und Rechtsanwälte PartmbB
Arabellastraße 30
81925 München (DE)**

(54) **SPECIFYING PROGRAM, SPECIFYING METHOD, AND INFORMATION PROCESSING APPARATUS**

(57)    A specifying program causes a computer (200) to execute a process including acquiring an attribute of training data acquiring a document related to a decision-making condition for a specific attribute of a user inputting a prompt including the attribute of the training data and a token of the document related to the decisionmaking condition to a large-scale language model and outputting an appearance probability of a token related to the attribute and specifying a label of a training target of a machine learning model from the training data based on the output appearance probability of the token.

**FIG.13**

**Description**

FIELD

The embodiment discussed herein is related to a specifying program.

BACKGROUND

An artificial intelligence (AI) system that supports decision-making such as loan examination and human resources recruitment is utilized, and development of an AI model that makes a determination based on domain knowledge possessed by interested parties such as loan examiners and recruiters is needed.

Here, the interested party indicates people involved with the AI system, such as customers who do not have specialized knowledge of machine learning, experts who perform actual operations, and auditors of the audit organization. In addition, the domain knowledge indicates knowledge related to the performance metrics and the conditions of the fairness metrics possessed by the interested party, and knowledge serving as a basis for determination on an individual case.

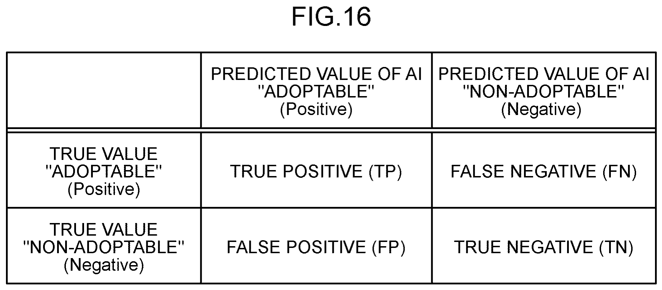

Performance metrics and fairness metrics are indicators for measuring predictive performance of AI. In the case of the AI that performs the loan examination, the correspondence relationship between the true value and the predicted value of the AI model regarding whether the loan can be adopted is a confusion matrix as illustrated in FIG. 16.

FIG. 16 is a diagram illustrating performance metrics and fairness metrics. A case where the predicted value of the AI (AI model) is "adoptable" and the true value is "adoptable" is a true positive. A true positive indicates a case where the applicant whose loan is to be approved is approved. True positive is indicated by TP (True Positive).

A case where the predicted value of AI is "adoptable", and the true value is "non-adoptable" is a false positive. A false positive indicates a case where an applicant whose loan is to not be approved is approved. False positives are indicated by FP (False Positive).

A case where the predicted value of AI is "non-adoptable" and the true value is "adoptable" is a false negative. A false negative indicates a case where the applicant whose loan is to be approved is rejected. A false negative is indicated by FN (False Negative).

A case where the predicted value of AI is "non-adoptable", and the true value is "non-adoptable" is a true negative. A true negative indicates a case where an applicant whose loan is to not be approved is rejected. A true negative is indicated by TN (True Negative).

The performance metrics are indexes such as precision, recall, and accuracy. For example, accuracy is defined as in Formula (1).

$$\text{Accuracy = (TP + TN)/(TP + FN + FP + TN)} \qquad (1)$$

The fairness metrics are Parity or the like and is an index for evaluating whether the AI has no bias in a specific attribute (for example, gender). For example, accuracy parity is indicated by an odds of accuracy between male and female and is defined as Formula (2).

$$\text{Accuracy Parity = Accuracy Parity}$$

$$\text{(Female)/Accuracy Parity (Male)} \qquad (2)$$

The performance metrics and the fairness metrics of the domain knowledge are described above.

The adjustment technique of the AI model can imitate the determination based on the domain knowledge. For example, in the adjustment technique of the AI model, there are hyperparameter adjustment, training using values of performance metrics and fairness metrics as objective functions, and training using weighting on a class or an attribute.

In the binary classification problem, there is a technique in the related art of finding a performance matrix needed by an interested party. In this related art, two different confusion matrices are presented several times to the interested party, and performance metrics are specified based on real-time reactions.

Patent Literature 1: Japanese National Publication of International Patent Application No. 2024-508502
Patent Literature 2: Japanese Laid-open Patent Publication No. 2023-162816
Patent Literature 3: U.S. Patent Application Publication No. 2019/0220705

However, in the related art described above, there is a problem that it is not possible to incorporate domain knowledges of the interested parties and construct an AI model close to human judgment.

In the related art, when it is desired to discover performance metrics limited to specific attributes from the opinion of the interested party, in a case where the attributes included in such an opinion are unclear, the performance metrics is specified. For example, when an interested party of the loan examination AI has an opinion that "consideration is to be given not only to the age of the applicant but also to the living situations of the applicant", and an attribute matching the "living situations" does not exist, the performance metrics cannot be specified.

Accordingly, it is an object in one aspect of an embodiment of the invention to provide a specifying program, a specifying method, and an information processing apparatus capable of incorporating domain knowledges of interested parties and constructing an AI model capable of executing human-like determination.

SUMMARY

According to an aspect of an embodiment, a specifying program causes a computer (200) to execute a process including acquiring an attribute of training data acquiring a document related to a decision-making condition for a specific attribute of a user inputting a prompt including the attribute of the training data and a token of the document related to the decision-making condition to a large-scale language model and outputting an appearance probability of a token related to the attribute and specifying a label of a training target of a machine learning model from the training data based on the output appearance probability of the token.

BRIEF DESCRIPTION OF DRAWINGS

FIG. 1 is a diagram illustrating a result according to a simple solution;
FIG. 2 is a diagram illustrating an example of a data structure of a training data set and an attribute list;
FIG. 3 is a diagram illustrating an example of an opinion of a user;
FIG. 4 is a flowchart illustrating a processing procedure of a mapping process;
FIG. 5 is a diagram supplementarily illustrating step S10;
FIG. 6 is a diagram illustrating an example of a data structure of a probability table;
FIG. 7 is a diagram supplementarily illustrating steps S13 to S15;
FIG. 8 is a flowchart illustrating a processing procedure of an ambiguity score calculation process;
FIG. 9 is a flowchart illustrating a processing procedure of an additional question process;
FIG. 10 is a diagram supplementarily illustrating steps S32 to S34;
FIG. 11 is a flowchart illustrating a processing procedure of a label specifying process;
FIG. 12 is a diagram supplementarily illustrating steps S41 and S42;
FIG. 13 is a functional block diagram illustrating a configuration of an information processing apparatus according to the present embodiment;
FIG. 14 is a flowchart illustrating a processing procedure of the information processing apparatus according to the present embodiment;
FIG. 15 is a diagram illustrating an example of a hardware configuration of a computer that implements functions similar to those of the information processing apparatus according to the embodiment; and
FIG. 16 is a diagram illustrating performance metrics and fairness metrics.

DESCRIPTION OF EMBODIMENT

Preferred embodiments of the present invention will be explained with reference to accompanying drawings. Note that the present invention is not limited by the example.

As described above, in the related art, when it is desired to discover performance metrics limited to specific attributes from the opinion of the interested party, in a case where the attributes included in such an opinion are unclear, the performance metrics cannot be specified. In this way, when the performance metrics cannot be specified, it is not possible to construct an AI model that can incorporate the domain knowledge of the interested parties and execute human-like determination.

Here, as a simple solution for specifying the attribute from the opinion of the interested party, a method of specifying the attribute using a large-scale language model is considered. Hereinafter, the large-scale language model is referred to as a large language model (LLM). For example, in a simple solution, an instruction "Please select an attribute related to the opinion" is output to the LLM, and the attribute that matches the opinion of the interested party is clarified through the dialogue between the interested party and the LLM.

The dialogues between interested parties and the LLM are defined as the following dialogues 1-1, 1-2, 1-3, and 1-4.

Dialogue 1-1 (Interested party): Please consider not only the age of an applicant but also the living situations in loan examination AI.

Dialogue 1-2 (LLM): Does "living situation" refer to "claim amount from two months ago", "claim amount from one month ago", "expenditure amount from two months ago", "expenditure amount from one month ago", "income", "employment status", or "housing type"?

Dialogue 1-3 (Interested party): I want to know a rough spending pattern, the person in question's information and the family situation.

Dialogue 1-4 (LLM): So, does "living situation" refer to "claim amount from two months ago", "claim amount from one month ago", "expenditure amount from two months ago", "expenditure amount from one month ago", "income", "housing type", or "family composition"?

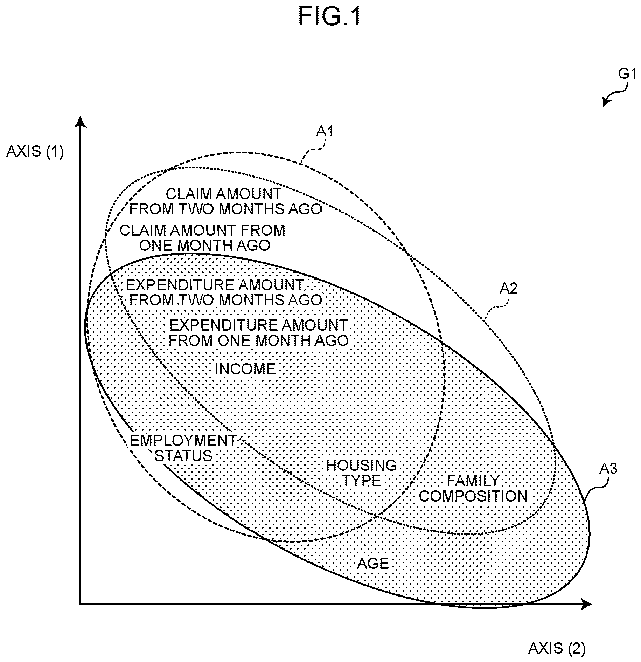

FIG. 1 is a diagram illustrating a result according to a simple solution. A graph G1 of FIG. 1 is a graph two-dimensionally illustrating a vector space when the names of attributes are vectorized in the LLM. The axis (1) of the graph G1 is an axis corresponding to one of two dimensions, and the axis (2) is an axis corresponding to the other of the two dimensions.

In the graph G1, the name of each attribute is arranged at a position corresponding to the value of the vector. The names of the attributes are "claim amount from two months ago", "claim amount from one month ago", "expenditure amount from two months ago", "expenditure amount from one month ago", "income", "employment status", "housing type", "family composition", and "age".

An area A1 is a range of the attributes estimated by the LLM by the dialogue 1-2. The area A1 includes "claim amount from two months ago", "claim amount from one month ago", "expenditure amount from two months ago", "expenditure amount from one month ago", "income", "employment status", and "housing type".

An area A2 is a range of the attribute estimated by the LLM by the dialogue 1-4. The area A2 includes "claim amount from two months ago", "claim amount from one month ago", "expenditure amount from two months ago", "expenditure amount from one month ago", "income", "housing type", and "family composition".

An area A3 is a range of attributes considered by the interested party. The area A3 includes "expenditure amount from two months ago", "expenditure amount from one month ago", "income", "employment status", "housing type", "age", and "family composition".

As illustrated in FIG. 1, in the simple solution, the range of the attribute of the area A2 and the range of the attribute of the area A3 are different, and even through repeated dialogue between the interested party and the LLM, it is not possible to specify the attribute that matches the opinion of the interested party. Note that the state in which the attribute that matches the opinion of the interested party can be specified means that the range of the attribute of the area A2 and the range of the attribute of the area A3 are the same.

Next, an information processing apparatus according to the present embodiment is described. The information processing apparatus according to the present embodiment is referred to as an "information processing apparatus 100". Also, the interested party is referred to as a "user". The information processing apparatus 100 analyzes an ambiguous opinion of the user using the LLM and specifies an attribute that matches the opinion. The information processing apparatus 100 finally generates training data in which a label indicating adoptability/non-adoptability reflecting the intention of the user is set.

For example, in order to embody an ambiguous opinion, the information processing apparatus 100 combines existing attributes to correspond to a new attribute. Furthermore, the information processing apparatus 100 quantifies the ambiguity of the opinion by using the ambiguity score and specifies a specific attribute by the additional question.

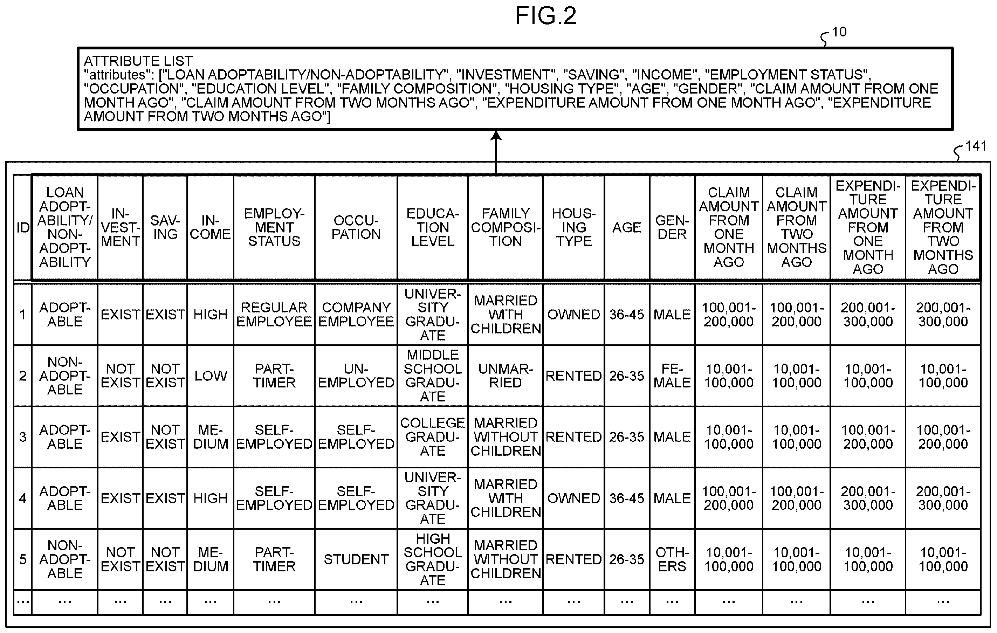

In the present embodiment, an attribute included in the training data is used as an attribute list. A plurality of pieces of training data is referred to as a "training data set". FIG. 2 is a diagram illustrating an example of a data structure of a training data set and an attribute list.

The training data set 141 includes an ID for identifying the training data and a plurality of attributes. In the example illustrated in FIG. 2, the attributes include "loan adoptability/non-adoptability", "investment", "saving", "income", "employment status", "occupation", "education level", "family composition", "housing type", "age", "gender", "claim amount from one month ago", "claim amount from two months ago", "expenditure amount from one month ago", and "expenditure amount from two months ago". Note that, at this stage, labels are not set in the training data set 141 and are set at the end of processes described below.

The information processing apparatus 100 acquires attributes of the training data set 141 and generates an attribute list 10. The attribute list 10 includes, as attributes, "loan adoptability/non-adoptability", "investment", "saving", "income", "employment status", "occupation", "education level", "family composition", "housing type", "age", "gender", "claim amount from one month ago", "claim amount from two months ago", "expenditure amount from one month ago", and "expenditure amount from two months ago". A combination of attributes set in the attribute list 10 is a combination of existing attributes.

The information processing apparatus 100 receives an input of an opinion from the user and associates an ambiguous attribute not included in the attribute list among the attributes included in the opinion, with a combination of attributes included in the attribute list.

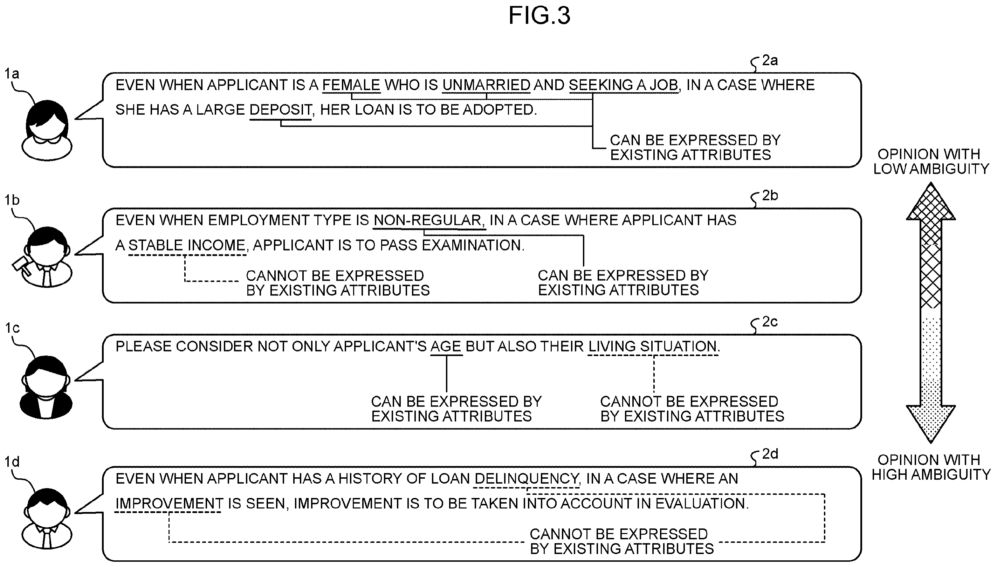

For example, a user inputs an opinion to the LLM in free description form. FIG. 3 is a diagram illustrating an example of an opinion of a user. For example, an opinion 2a input by a user 1a is "Even when the applicant is a female who is unmarried and seeking a job, in a case where she has a large deposit, her loan is to be adopted." "Unmarried", "seeking a job", "female", and "deposit" included in the opinion 2a are attributes included in the attribute list 10 and can be expressed by existing attributes.

An opinion 2b input by a user 1b is "Even when the employment type is non-regular, in a case where the applicant has a stable income, the applicant is to pass the examination." "Non-regular" included in the opinion 2b is an attribute included in the attribute list 10 and can be expressed by the existing attributes. Meanwhile, the "stable income" included in the opinion 2b is not included in the attribute list 10 and cannot be expressed by the existing attributes.

An opinion 2c input by a user 1c is "Please consider not only the applicant's age but also their living situation." "Age" included in the opinion 2c is an attribute included in the attribute list 10 and can be expressed by the existing attributes. Meanwhile, "living situation" included in the opinion 2c is not included in the attribute list 10 and cannot be expressed by the existing attributes.

An opinion 2d input by a user 1d is "Even when the applicant has a history of loan delinquency, in a case where an improvement is seen, the improvement is to be taken into account in the evaluation." Meanwhile, "delinquency" and "improvement" included in the opinion 2d are not included in the attribute list 10 and cannot be expressed by the existing attributes.

Among the opinions 2a to 2d illustrated in FIG. 3, the opinion 2a is the least ambiguous, and the ambiguity increases in the order of the opinion 2b, the opinion 2c, and the opinion 2d. In the present embodiment, processing of the information processing apparatus 100 is described by using the opinion 2c. The opinions 2a to 2d correspond to "documents related to decision-making conditions for a specific attribute of the user".

For example, the information processing apparatus 100 executes a mapping process, an ambiguity score calculation process, an additional question process, and a label specifying process on the opinion 2c. Hereinafter, the processes are sequentially described.

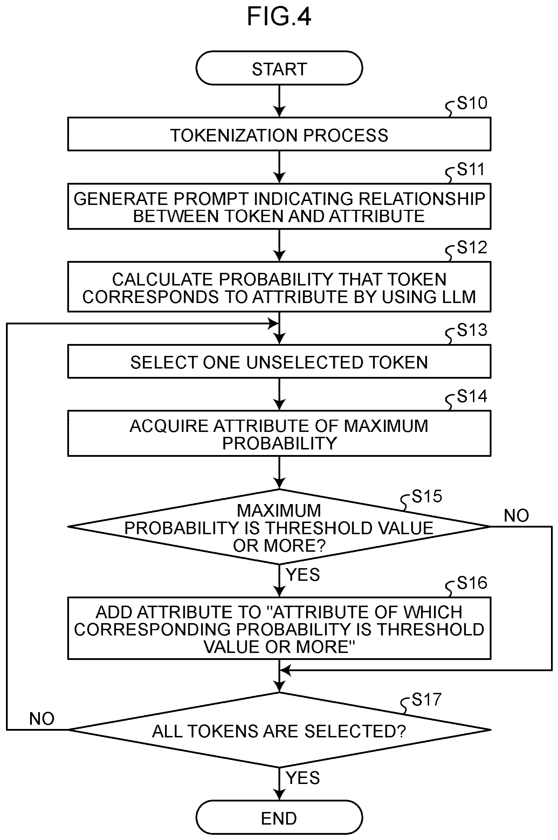

First, the mapping process is described. FIG. 4 is a flowchart illustrating a processing procedure of the mapping process. As illustrated in FIG. 4, the information processing apparatus 100 executes a tokenization process (step S10). The information processing apparatus 100 generates a prompt indicating a relationship between a token and an attribute (step S11). The information processing apparatus 100 calculates the probability that the token corresponds to the attribute by using the LLM (step S12).

The information processing apparatus 100 selects one unselected token (step S13). The information processing apparatus 100 acquires the attribute of the maximum probability among the probabilities of the attributes corresponding to the selected token (step S14). When the maximum probability is not the threshold value or more (Step S15, No), the information processing apparatus 100 proceeds to step S17.

Meanwhile, when the maximum probability is the threshold value or more (Step S15, Yes), the information processing apparatus 100 adds the selected attribute to the "attribute of which the corresponding probability is the threshold value or more" (step S16).

When not all the tokens are selected (step S17, No), the information processing apparatus 100 proceeds to step S13. Meanwhile, when not all the tokens are selected (Step S17, Yes), the information processing apparatus 100 ends the mapping process.

Subsequently, the mapping process of FIG. 4 is supplementarily described.

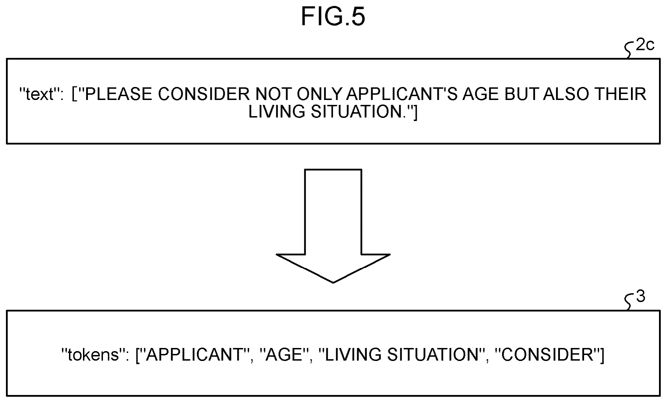

Step S10 is supplementarily described. FIG. 5 is a diagram supplementarily illustrating step S10. The information processing apparatus 100 performs morphological analysis on the text "Please consider not only the applicant's age but also their living situation." included in the opinion 2c. Thus, the information processing apparatus 100 divides the text into units (tokens) of words, phrases, and the like and removes punctuation marks, postpositional particles, and the like, thereby generating token information 3.

For example, the token information 3 includes a plurality of tokens such as "applicant", "age", "living situation", and "consider".

Next, step S11 is supplementarily described. The information processing apparatus 100 generates a prompt obtained by combining all the attributes of the attribute list 10 for each token included in the token information 3. As a result, the information processing apparatus 100 generates prompts of "number of tokens" × "number of attributes".

The information processing apparatus 100 generates prompts by "prompt = f" {tokens} means {attributes}". For example, a prompt based on the token "applicant" and the attribute "housing type" is "prompt = f" {applicant} means {housing type}".

Next, step S12 is supplementarily described. For example, the information processing apparatus 100 inputs "prompt = f" {applicant} means {housing type}" to the LLM and acquires the probability that the token "applicant" corresponds to the attribute "housing type" from the LLM. The information processing apparatus 100 inputs a prompt corresponding to the relationship between another token and the attribute to the LLM and acquires the probability that the token corresponds to the attribute.

Here, the information processing apparatus 100 uses a characteristic that the LLM can output an appearance probability (log probability) of a token. The information processing apparatus 100 inputs a prompt to the LLM and acquires the appearance probability output from the LLM as the probability of the attribute for the token.

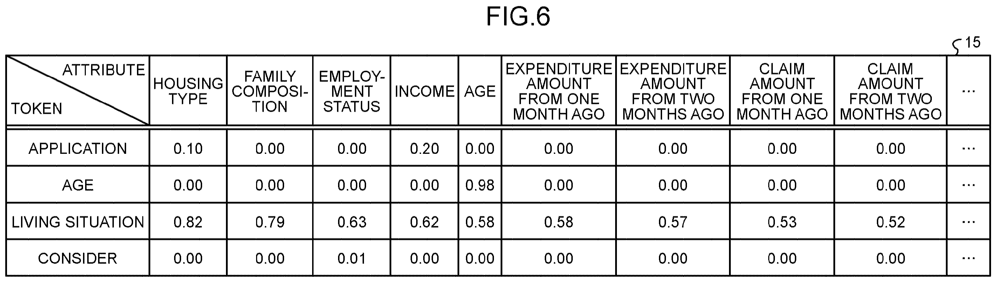

The information processing apparatus 100 generates a probability table by executing the above processing. FIG. 6 is a diagram illustrating an example of a data structure of the probability table. As illustrated in FIG. 6, a probability table 15 stores a probability that a token corresponds to an attribute. For example, it is indicated that the probability that the token "applicant" corresponds to the attribute "housing type" is "0.10".

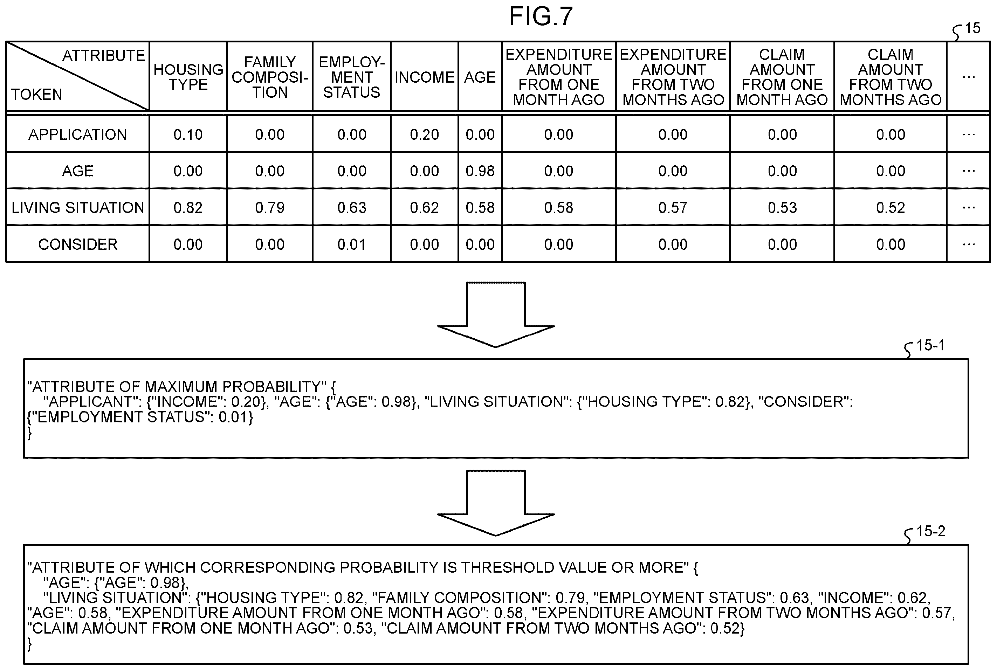

Next, steps S13 to S15 are supplementarily described. FIG. 7 is a diagram supplementarily illustrating steps S13 to S15. For example, when the information processing apparatus 100 selects the token "applicant", the attribute of the maximum probability among the attributes is "income" with the probability of "0.20". The information processing apparatus 100 registers the token "applicant", the attribute "income", and the probability "0.20" in a table 15-1 in an associated manner.

For example, when the information processing apparatus 100 selects the token "age", the attribute of the maximum probability among the attributes is "age" with the probability of "0.98". The information processing apparatus 100 registers the token "age", the attribute "age", and the probability "0.98" in the table 15-1 in an associated manner.

For example, when the information processing apparatus 100 selects the token "living situation", the attribute of the maximum probability among the attributes is "housing type" with the probability of "0.82". The information processing apparatus 100 registers the token "living situation", the attribute "housing type", and the probability "0.82" in the table 15-1 in an associated manner.

For example, when the information processing apparatus 100 selects the token "consider", the attribute of the maximum probability among the attributes is "employment status" with the probability of "0.01". The information processing apparatus 100 registers the token "consider", the attribute "employment status", and the probability "0.01" in the table 15-1 in an associated manner.

The information processing apparatus 100 selects a token of which the probability is the threshold value or more from the table 15-1, selects all attributes of which the probabilities are the threshold value or more among the attributes corresponding to the selected token from the probability table 15, and registers the selected attributes in a table 15-2. For example, the threshold value is set to 0.5.

For example, the information processing apparatus 100 selects the tokens "age" and "living situation" of which probabilities are the threshold value (0.5) or more from the tokens registered in the table 15-1.

The information processing apparatus 100 selects the attribute "age" that is the threshold value (0.5) or more among attributes corresponding to the token "age" in the probability table 15. The information processing apparatus 100 registers the token "age", the attribute "age", and the probability "0.98" in the table 15-2 in an associated manner.

Among the attributes corresponding to the token "living situation" of the probability table 15, the information processing apparatus 100 selects attributes "housing type", "family composition", "employment status", "income", "age", "expenditure amount from one month ago", "expenditure amount from two months ago", "claim amount from one month ago", and "claim amount from two months ago" which are the threshold value (0.5) or more. As illustrated in FIG. 7, the information processing apparatus 100 registers the token "living situation", the selected attributes, and the probabilities of the attributes in the table 15-2 in an associated manner. For example, the probability of the attribute "housing type" is "0.82". The probability of the attribute "family composition" is "0.79". The probability of the attribute "employment status" is "0.63". The probability of the attribute "income" is "0.62". The probability of the attribute "age" is "0.58". The probability of the attribute "expenditure amount from one month ago" is "0.58". The probability of the attribute "expenditure amount from two months ago" is "0.57". The probability of the attribute "claim amount from one month ago" is "0.53". The probability of the attribute "claim amount from two months ago" is "0.52".

The mapping process is described above.

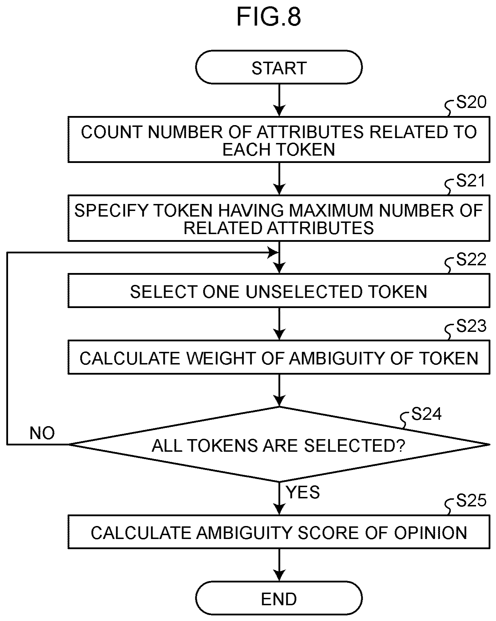

Next, the ambiguity score calculation process is described. FIG. 8 is a flowchart illustrating a processing procedure of the ambiguity score calculation process. As illustrated in FIG. 8, the information processing apparatus 100 counts the number of attributes associated with each token based on the table 15-2 (step S20). The information processing apparatus 100 specifies a token having the maximum number of related attributes (step S21).

The information processing apparatus 100 selects one unselected token from the tokens in the table 15-2 (step S22). The information processing apparatus 100 calculates the weight of the ambiguity of the token (step S23). When not all the tokens in the table 15-2 have been selected (Step S24, No), the information processing apparatus 100 proceeds to step S22.

Meanwhile, when all the tokens in the table 15-2 are selected (Step S24, Yes), the information processing apparatus 100 calculates an ambiguity score of the opinion (step S25).

Next, the ambiguity score calculation process of FIG. 8 is supplementarily described.

Step S20 is supplementarily described. For example, the information processing apparatus 100 specifies the number "1" of attributes associated with the token "age" based on the table 15-2 illustrated in FIG. 7. The information processing apparatus 100 specifies the number "9" of attributes associated with the token "living situation".

Step S21 is supplementarily described. For example, since the number of related attributes of the token "age" is "1", and the number of related attributes of the token "living situation" is "9", the information processing apparatus 100 specifies the token "living situation" as the token with the maximum number of related attributes.

Steps S22 to S24 are supplementarily described. The information processing apparatus 100 calculates the weight of ambiguity of the tokens "age" and "living situation" registered in the table 15-2 based on Formula (3). The maximum number of attributes is the number of attributes of the token specified in step S21.

Weight of ambiguity of token = Number of attributes related to token/Maximum number of attributes         (3)

For example, the information processing apparatus 100 calculates a weight "1/9 = 0.11" of ambiguity of the token "age". The information processing apparatus 100 calculates a weight "9/9 = 1.00" of ambiguity of the token "living situation".

Step S25 is supplementarily described. The information processing apparatus 100 calculates the ambiguity score of the opinion based on Formula (4). The total number of tokens of the opinion in Formula (4) is the number of tokens set in the table 15-2, and in the example illustrated in FIG. 7, the total number of tokens is "2".

Ambiguity score of opinion = Σ(Weights of ambiguity of tokens)/Total number of tokens of opinion         (4)

When the information processing apparatus 100 calculates the score of the ambiguity of the opinion 2c based on Formula (4), the score of the ambiguity is "(0.11 + 1.00)/2 = 0.55".

The ambiguity score calculation process is described above.

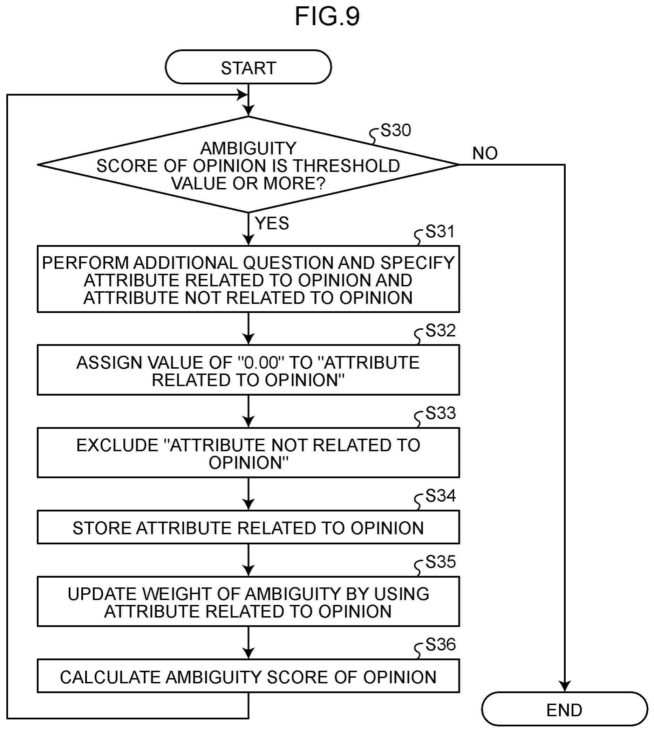

Next, the additional question process is described. FIG. 9 is a flowchart illustrating a processing procedure of the additional question process. As illustrated in FIG. 9, when the ambiguity score of the opinion is not the threshold value (0.5) or more (Step S30, No), the information processing apparatus 100 ends the additional question process. Meanwhile, when the ambiguity score of the opinion is the threshold value (0.5) or more (Step S30, Yes), the information processing apparatus 100 proceeds to step S31.

The information processing apparatus 100 performs an additional question and specifies an attribute related to the opinion and an attribute not related to the opinion (step S31). The information processing apparatus 100 assigns a value of "0.00" to the "attribute related to the opinion" (step S32). The information processing apparatus 100 excludes the "attribute not related to the opinion" (step S33).

The information processing apparatus 100 stores the attribute related to the opinion (step S34). The information processing apparatus 100 updates the weight of ambiguity by using the attribute related to the opinion (step S35). The information processing apparatus 100 calculates an ambiguity score of the opinion (step S36) and proceeds to step S30.

Subsequently, the additional question process of FIG. 9 is supplementarily described.

Step S31 is supplementarily described. The information processing apparatus 100 instructs the LLM to confirm the related attribute and the unrelated attribute to the user by using the attributes "housing type", "family composition", "employment status", "income", "age", "expenditure amount from one month ago", "expenditure amount from two months ago", "claim amount from one month ago", and "claim amount from two months ago" set in the table 15-2 of FIG. 7. Then, the LLM generates a dialogue 2-1 as follows.

Dialogue 2-1 (LLM): Please clarify attributes related to your opinion. Please list an attribute related to your opinion and an unrelated attribute from the list below.

List ["housing type", "family composition", "employment status", "income", "age", "expenditure amount from one month ago", "expenditure amount from two months ago", "claim amount from one month ago", and "claim amount from two months ago"]

Here, it is assumed that the user who has referred to the dialogue 2-1 inputs the following dialogue 2-2.

Dialogue 2-2 (User): The related attributes are "housing type", "family composition", "employment status", "income", "age", "expenditure amount from one month ago", and "expenditure amount from two months ago". The unrelated attributes are "claim amount from one month ago" and "claim amount from two months ago".

Based on the contents of the dialogue 2-2, the information processing apparatus 100 specifies that the related attributes are "housing type", "family composition", "employment status", "income", "age", "expenditure amount from one month ago", and "expenditure amount from two months ago", and the unrelated attributes are "claim amount from one month ago", and "claim amount from two months ago".

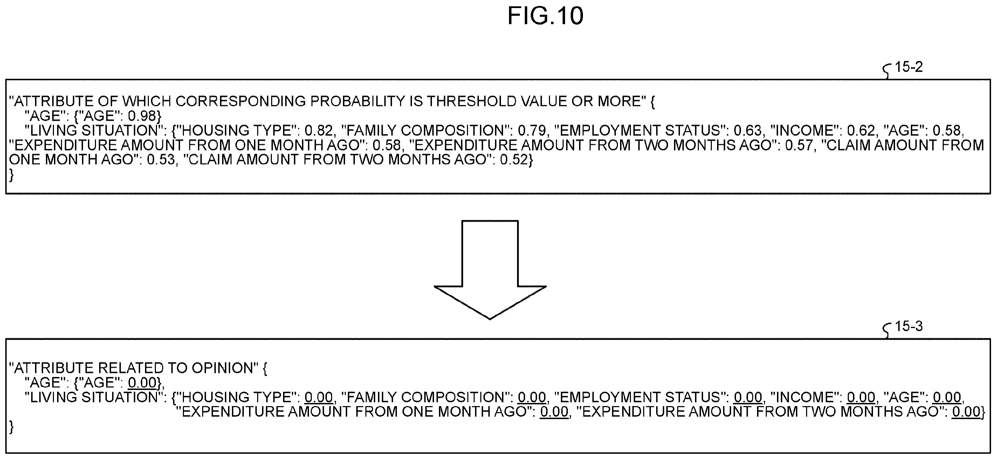

Steps S32 to S34 are supplementarily described. FIG. 10 is a diagram supplementarily illustrating steps S32 to S34. The information processing apparatus 100 sets the probability to "0.00" for related attributes among the attributes included in the table 15-2. Furthermore, the information processing apparatus 100 deletes unrelated attributes among the attributes included in the table 15-2. As a result, the information processing apparatus 100 generates and stores a table 15-3.

Step S35 is supplementarily described. For each token, the information processing apparatus 100 updates the average value of the probabilities of the related attributes as the weight of the ambiguity of each token based on the table 15-3. For example, the weight of the ambiguity of the token "age" is "0.00/1 = 0". The weight of the ambiguity of the token "living situation" is "0.00 + 0.00 + 0.00 + 0.00 + 0.00 + 0.00 + 0.00 + 0.00 +/= 0".

Step S36 is supplementarily described. The information processing apparatus 100 calculates the ambiguity score of the opinion by using the weight of the ambiguity of each token obtained in step S35. When the information processing apparatus 100 calculates the score of the ambiguity of the opinion 2c based on Formula (4), the score of the ambiguity is "(0 + 0)/2 = 0".

The additional question process is described above.

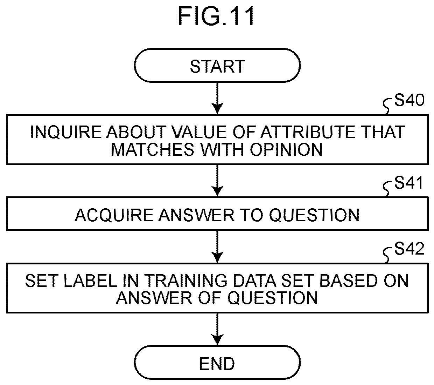

Next, the label specifying process is described. FIG. 11 is a flowchart illustrating a processing procedure of the label specifying process. As illustrated in FIG. 11, the information processing apparatus 100 inquires about the value of the attribute that matches with the opinion (step S40).

The information processing apparatus 100 acquires an answer to the question (step S41). The information processing apparatus 100 sets a label in the training data set 141 based on the answer of the question (step S42).

Next, the label specifying process of FIG. 11 is supplementarily described.

Step 40 is supplementarily described. The information processing apparatus 100 instructs the LLM to obtain a specific value for the attribute that is set in the table 15-3 in FIG. 10 and is related to the opinion. For example, the attributes related to the opinion are "housing type", "family composition", "employment status", "income", "age", "expenditure amount from one month ago", and "expenditure amount from two months ago". Then, the LLM generates a dialogue 3-1 as follows.

Dialogue 3-1 (LLM): Please select values for each attribute when it is determined that "loan is adoptable" under the following conditions.

"Family composition": unmarried, married without children, married with children
"Housing type": owned, rented, living with parents
"Income": high, medium, low
"Employment status": regular employee, contract employee, part-timer, self-employed, unemployed
"Age": 18 to 25, 26 to 35, 36 to 45, 46 to 55, 56 to 66, 67 or more
"Expenditure amount from one month ago", "Expenditure amount from two months ago":

10,000-100,000
100,001-200,000
200,001-300,000
300,001-500,000
500,001-100,000
100,001 or more

Here, it is assumed that the user who has referred to the dialogue 3-1 inputs the dialogue 3-1.

Dialogue 3-2 (user): When "expenditure amount from one month ago", "expenditure amount from two months ago" is 200,001 to 300,000 yen, "family composition" is married without children or married with children, "housing type" is owned or rented, "income" is high, "employment status" is regular employee or self-employed, and "age" is 36 to 45, 46 to 55, 56 to 65, "loan repayment is possible".

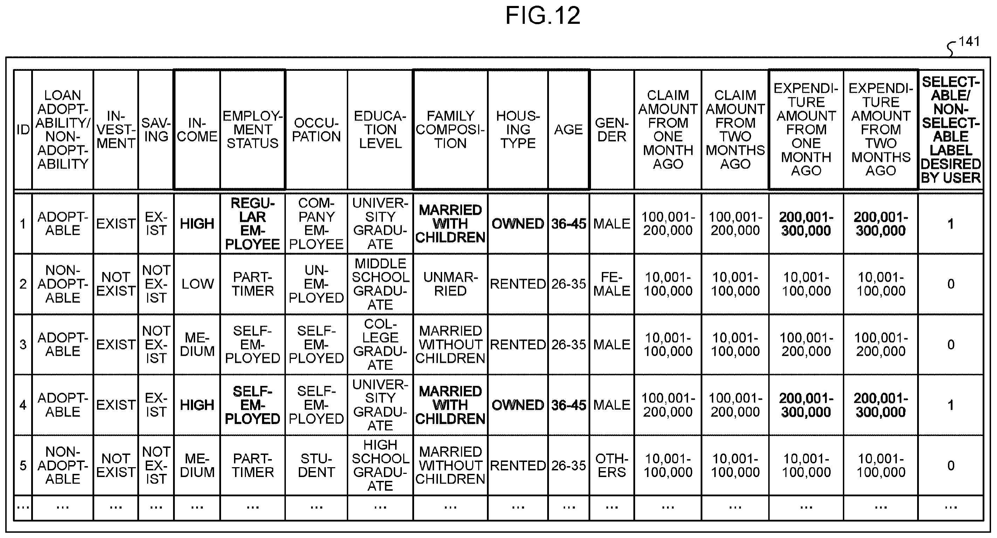

Steps S41 and S42 are supplementarily described. FIG. 12 is a diagram supplementarily illustrating steps S41 and S42. The information processing apparatus 100 sets a label in the training data set 141 based on the attribute corresponding to "loan repayment is possible" indicated in the dialogue 3-2 and the value thereof.

The information processing apparatus 100 sets a label of training data satisfying an attribute corresponding to "loan repayment is possible" and the value thereof to "1". The label "1" indicates that the loan is adoptable. Meanwhile, the information processing apparatus 100 sets a label of training data not satisfying an attribute corresponding to "loan repayment is possible" and the value thereof to "0". The label "0" indicates that the loan is not adoptable.

For example, among the items of the training data included in the training data set 141, the training data with the IDs "1" and "4" satisfy the attribute corresponding to "loan repayment is possible" and the value thereof. Therefore, the information processing apparatus 100 sets the labels of the training data with the IDs "1" and "4" to "1".

Among the items of the training data included in the training data set 141, the training data with the IDs "2", "3", and "5" does not satisfy the attribute corresponding to "loan repayment is possible" and the value thereof. Therefore, the information processing apparatus 100 sets the labels of the training data with the IDs "2", "3", and "5" to "0".

The label specifying process is described above.

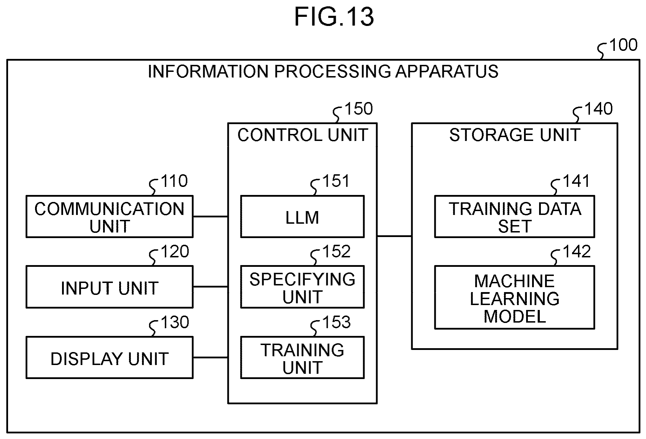

Next, a configuration example of the information processing apparatus 100 that executes the mapping process, the ambiguity score calculation process, the additional question process, and the label specifying process is described. FIG. 13 is a functional block diagram illustrating a configuration of an information processing apparatus according to the present embodiment. As illustrated in FIG. 13, the information processing apparatus 100 includes a communication unit 110, an input unit 120, a display unit 130, a storage unit 140, and a control unit 150.

The communication unit 110 executes data communication with a user terminal used by the user via the network. Furthermore, the communication unit 110 may be connected to an external device and receive the training data set 141 and the like from the external device.

The input unit 120 inputs various types of information to the control unit 150. The user may interact with a LLM 151 through the network or may operate the input unit 120 to interact with the LLM 151.

The display unit 130 displays the information output from the control unit 150.

The storage unit 140 includes the training data set 141 and a machine learning model 142. The storage unit 140 is a memory or the like.

The training data set 141 has a plurality of pieces of training data. In each piece of the training data, a plurality of attributes and values corresponding to the attributes are set. The initial value of the label of each item of the training data is not set. The description related to the training data set 141 is similar to the content illustrated in FIGS. 2 and 12.

The machine learning model 142 is a neural network (NN) or the like.

The control unit 150 includes the LLM 151, a specifying unit 152, and a training unit 153. The control unit 150 is a central processing unit (CPU), a graphics processing unit (GPU), or the like.

The LLM 151 has a function of a large-scale language model and interacts with a user. When an instruction is received from the specifying unit 152, the LLM 151 interacts with the user according to the instruction. The LLM 151 may implement the functions of the large-scale language model by using an LLM server connected via a network.

The reason why the LLM can output the appearance probability of the token is that the statistical pattern of the language is trained through preliminary training. For example, a large amount of text data is prepared as training data, and the pieces of text data are divided into tokens. As an objective function, a target for predicting the probability of the next token is set based on the given context (previous and next tokens). For example, an architecture called Transformer is used to train the LLM based on back propagation so that the prediction result of the LLM is as accurate as possible to the target. Upon completion of such training, the LLM may calculate the appearance probability of each token and create a sentence.

The specifying unit 152 monitors the interaction between the user and the LLM 151, specifies the label of the training data set 141 based on the user's opinion, and updates the training data set 141.

For example, when acquiring the user's opinion from the user terminal or the input unit 120, the specifying unit 152 executes the mapping process, the ambiguity score calculation process, the additional question process, and the label specifying process on the user's opinion.

The mapping process executed by the specifying unit 152 corresponds to the process illustrated in FIG. 4 and the like. The ambiguity score calculation process executed by the specifying unit 152 corresponds to the processes illustrated in FIG. 8 and the like. The additional question process executed by the specifying unit 152 corresponds to the process illustrated in FIG. 9 and the like. The label specifying process executed by the specifying unit 152 corresponds to the process illustrated in FIG. 11.

The training unit 153 trains the machine learning model 142 using the training data set 141. For example, the training unit 153 trains the machine learning model 142 based on back propagation with the value of the attribute of the training data as an explanatory variable and the label as an objective variable.

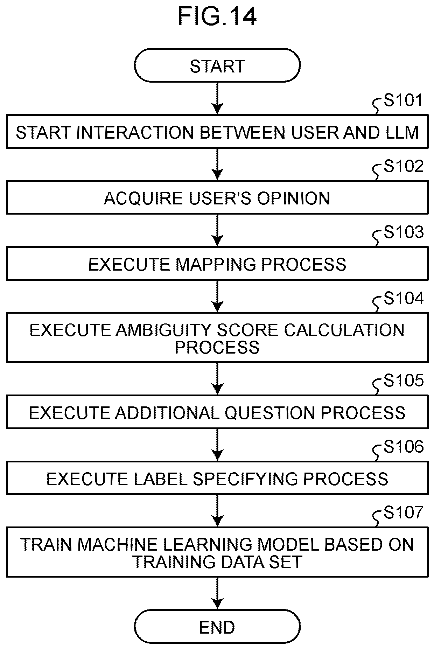

Next, an example of a processing procedure of the information processing apparatus 100 according to the present embodiment is described. FIG. 14 is a flowchart illustrating the processing procedure of the information processing apparatus according to the present embodiment. As illustrated in FIG. 14, an interaction is started between the user and the LLM 151 of the information processing apparatus 100 (step S101).

The specifying unit 152 of the information processing apparatus 100 acquires the user's opinion (step S102). The specifying unit 152 executes the mapping process (step S103). The specifying unit 152 executes the ambiguity score calculation process (step S104).

The specifying unit 152 executes the additional question process (step S105). The specifying unit 152 executes the label specifying process (step S106). The training unit 153 of the information processing apparatus 100 trains the machine learning model 142 based on the training data set 141 (step S107).

Here, the processing procedure of the mapping process illustrated in step S103 of FIG. 14 corresponds to the processing procedure illustrated in FIG. 4. The processing procedure of the ambiguity score calculation process illustrated in step S104 corresponds to the processing procedure illustrated in FIG. 8. The processing procedure of the additional question process illustrated in step S105 corresponds to the processing procedure illustrated in FIG. 9. The processing procedure of the label specifying process illustrated in step S106 corresponds to the processing procedure illustrated in FIG. 11.

Next, the effect of the information processing apparatus 100 according to the present embodiment is described. The information processing apparatus 100 acquires the attribute from the training data, acquires the opinion from the user, and inputs, to the LLM 151, the prompt for the token included in the opinion and the attribute, thereby obtaining the appearance probability of the token related to the attribute. The information processing apparatus 100 specifies the label corresponding to the training data based on the appearance probability of the token related to the attribute.

By using the training data in which the specified label is set, it is possible to incorporate the domain knowledge of the interested party and construct the machine learning model 142 capable of executing human-like determination. In addition, in the areas such as loan examination, the opinions of non-experts of customers and audit organizations can be handled similarly to the experts in the areas, and opinions of various interested parties can be reflected in the machine learning model 142.

The information processing apparatus 100 calculates a score related to the ambiguity of the opinion based on the appearance probability of the token related to the attribute and receives selection of an attribute related to the opinion and an attribute not related to the opinion among a plurality of attributes related to the token included in the opinion of which the score is a threshold value or more. Furthermore, the information processing apparatus 100 sets the appearance probability of the attribute related to the opinion among the plurality of attributes related to the token to 0 and calculates the score related to the ambiguity of the opinion based on the appearance probability of each attribute of the token obtained as a result of excluding the attribute not related to the opinion from the plurality of attributes related to the token. The information processing apparatus 100 specifies the label based on the attribute obtained by excluding the attribute not related to the opinion among the plurality of attributes related to the token included in the opinion of which the score is less than the threshold value. As a result, by combining an ambiguous opinion with existing attributes, it is possible to change implicit information and nuances included in the opinion to a form in which the model can easily learn. In addition, the basis of the combination of attributes presented by the LLM 151 can be clarified.

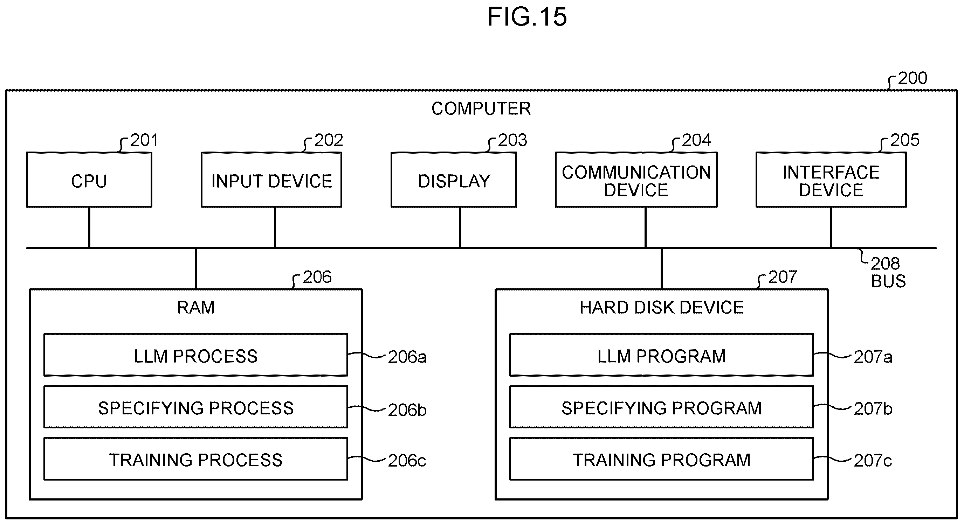

Next, an example of a hardware configuration of a computer that implements functions similar to those of the information processing apparatus 100 described above is described. FIG. 15 is a diagram illustrating an example of a hardware configuration of a computer that implements functions similar to those of the information processing apparatus according to the embodiment.

As illustrated in the drawing, a computer 200 includes a CPU 201 that executes various arithmetic processes, an input device 202 that receives an input of data from a user, and a display 203. Furthermore, the computer 200 includes a communication device 204 that transmits and receives data to and from a user terminal, an external device, or the like via a wired or wireless network, and an interface device 205. In addition, the computer 200 includes a RAM 206 that temporarily stores various types of information and a hard disk device 207. Each of the devices 201 to 207 is connected to a bus 208.

The hard disk device 207 includes an LLM program 207a, a specifying program 207b, and a training program 207c. The CPU 201 reads each of the programs 207a to 207c and loads the programs into the RAM 206.

The LLM program 207a functions as an LLM process 206a. The specifying program 207b functions as a specifying process 206b. The training program 207c functions as a training process 206c.

The process of the LLM process 206a corresponds to the process of the LLM 151. The process of the specifying process 206b corresponds to the process of the specifying unit 152. The process of the training process 206c corresponds to the process of the training unit 153.

Note that each of the programs 207a to 207c does not necessarily need to be stored in the hard disk device 207 from the beginning. For example, each program is stored in a "portable physical medium" such as a flexible disk (FD), a CD-ROM, a DVD, a magneto-optical disk, or an IC card inserted into the computer 200. Then, the computer 200 may read and execute the programs 207a to 207c.

To construct an AI model capable of executing human-like determination by incorporating domain knowledges of interested parties.

**Claims**

**1.** A specifying program that causes a computer (200) to execute a process comprising:

acquiring an attribute of training data;
acquiring a document related to a decision-making condition for a specific attribute of a user;
inputting a prompt including the attribute of the training data and a token of the document related to the decision-making condition to a large-scale language model and outputting an appearance probability of a token related to the attribute; and
specifying a label of a training target of a machine learning model from the training data based on the output appearance probability of the token.

2. The specifying program according to claim 1, wherein the process further includes: outputting the appearance probabilities of the token and the attribute for each attribute, specifying the token of which any of the appearance probability is a threshold value or more, and calculating a score related to an ambiguity of the document based on an application probability for each attribute of the specified token.

3. The specifying program according to claim 2, wherein the process further includes: receiving selection of an attribute related to the document and an attribute not related to the document among a plurality of attributes related to the token of which the score is the threshold value or more and which is included in the document.

4. The specifying program according to claim 3, wherein the process further includes: setting an appearance probability of the attribute related to the document among the plurality of attributes related to the token to zero and calculating the score related to an ambiguity of the document based on an appearance probability for each attribute of the token, which is obtained by excluding the attribute not related to the document from the plurality of attributes related to the token.

5. The specifying program according to claim 4, wherein the process further includes specifying the label based on an attribute obtained by excluding the attribute not related to the document among the plurality of attributes related to the token included in the document of which the score is less than a threshold value.

6. The specifying program according to claim 1, wherein the process further includes: training the machine learning model based on the training data.

7. A specifying method performed by a computer (200), the method comprising:

    acquiring an attribute of training data;
    acquiring a document related to a decision-making condition for a specific attribute of a user;
    inputting a prompt including the attribute of the training data and a token of the document related to the decision-making condition to a large-scale language model and outputting an appearance probability of a token related to the attribute; and
    specifying a label of a training target of a machine learning model from the training data based on the output appearance probability of the token.

8. The specifying method performed by the computer (200) according to claim 7, further including: outputting the appearance probabilities of the token and the attribute for each attribute, specifying the token of which any of the appearance probability is a threshold value or more, and calculating a score related to an ambiguity of the document based on an application probability for each attribute of the specified token.

9. The specifying method performed by the computer (200) according to claim 8, further including: receiving selection of an attribute related to the document and an attribute not related to the document among a plurality of attributes related to the token of which the score is the threshold value or more and which is included in the document.

10. The specifying method performed by the computer (200) according to claim 9, further including: setting an appearance probability of the attribute related to the document among the plurality of attributes related to the token to zero and calculating the score related to an ambiguity of the document based on the appearance probability for each attribute of the token, which is obtained by excluding the attribute not related to the document from the plurality of attributes related to the token.

11. The specifying method according to claim 10, further including specifying the label based on an attribute obtained by excluding the attribute not related to the document among the plurality of attributes related to the token included in the document of which the score is less than a threshold value.

12. An information processing apparatus comprising a control unit (150) configured to:

    acquire an attribute of training data;
    acquire a document related to a decision-making condition for a specific attribute of a user;
    input a prompt including the attribute of the training data and a token of the document related to the decision-making condition to a large-scale language model and output an appearance probability of a token related to the attribute; and

specify a label of a training target of a machine learning model from the training data based on the output appearance probability of the token.

13. The information processing apparatus according to claim 12, wherein the control unit (150) is further configured to output the appearance probabilities of the token and the attribute for each attribute, specify the token of which any of the appearance probability is a threshold value or more, and calculate a score related to an ambiguity of the document based on an application probability for each attribute of the specified token.

14. The information processing apparatus according to claim 13, wherein the control unit (150) is further configured to receive selection of an attribute related to the document and an attribute not related to the document among a plurality of attributes related to the token of which the score is the threshold value or more and which is included in the document.

15. The information processing apparatus according to claim 14, wherein the control unit (150) is further configured to set an appearance probability of the attribute related to the document among the plurality of attributes related to the token to zero and calculate the score related to an ambiguity of the document based on the appearance probability for each attribute of the token, which is obtained by excluding the attribute not related to the document from the plurality of attributes related to the token.

# FIG.1

AXIS (1)

G1

A1

CLAIM AMOUNT
FROM TWO MONTHS AGO
CLAIM AMOUNT FROM
ONE MONTH AGO

EXPENDITURE AMOUNT
FROM TWO MONTHS AGO
EXPENDITURE AMOUNT
FROM ONE MONTH AGO

INCOME

A2

EMPLOYMENT
STATUS

HOUSING
TYPE

FAMILY
COMPOSITION

A3

AGE

AXIS (2)

# FIG.2

ATTRIBUTE LIST
"attributes": ["LOAN ADOPTABILITY/NON-ADOPTABILITY", "INVESTMENT", "SAVING", "INCOME", "EMPLOYMENT STATUS", "OCCUPATION", "EDUCATION LEVEL", "FAMILY COMPOSITION", "HOUSING TYPE", "AGE", "GENDER", "CLAIM AMOUNT FROM ONE MONTH AGO", "CLAIM AMOUNT FROM TWO MONTHS AGO", "EXPENDITURE AMOUNT FROM ONE MONTH AGO", "EXPENDITURE AMOUNT FROM TWO MONTHS AGO"]

| ID | LOAN ADOPT-ABILITY/ NON-ADOPT-ABILITY | IN-VEST-MENT | SAV-ING | IN-COME | EMPLOY-MENT STATUS | OCCU-PATION | EDUCA-TION LEVEL | FAMILY COMPOSI-TION | HOUS-ING TYPE | AGE | GEN-DER | CLAIM AMOUNT FROM ONE MONTH AGO | CLAIM AMOUNT FROM TWO MONTHS AGO | EXPENDI-TURE AMOUNT FROM ONE MONTH AGO | EXPENDI-TURE AMOUNT FROM TWO MONTHS AGO |
|---|---|---|---|---|---|---|---|---|---|---|---|---|---|---|---|
| 1 | ADOPT-ABLE | EXIST | EXIST | HIGH | REGULAR EMPLOYEE | COMPANY EMPLOYEE | UNIVER-SITY GRADU-ATE | MARRIED WITH CHILDREN | OWNED | 36-45 | MALE | 100,001-200,000 | 100,001-200,000 | 200,001-300,000 | 200,001-300,000 |
| 2 | NON-ADOPT-ABLE | NOT EXIST | NOT EXIST | LOW | PART-TIMER | UN-EMPLOYED | MIDDLE SCHOOL GRADU-ATE | UNMAR-RIED | RENTED | 26-35 | FE-MALE | 10,001-100,000 | 10,001-100,000 | 10,001-100,000 | 10,001-100,000 |
| 3 | ADOPT-ABLE | EXIST | NOT EXIST | ME-DIUM | SELF-EMPLOYED | SELF-EMPLOYED | COLLEGE GRADU-ATE | MARRIED WITHOUT CHILDREN | RENTED | 26-35 | MALE | 10,001-100,000 | 10,001-100,000 | 100,001-200,000 | 100,001-200,000 |
| 4 | ADOPT-ABLE | EXIST | EXIST | HIGH | SELF-EMPLOYED | SELF-EMPLOYED | UNIVER-SITY GRADU-ATE | MARRIED WITH CHILDREN | OWNED | 36-45 | MALE | 100,001-200,000 | 100,001-200,000 | 200,001-300,000 | 200,001-300,000 |
| 5 | NON-ADOPT-ABLE | NOT EXIST | NOT EXIST | ME-DIUM | PART-TIMER | STUDENT | HIGH SCHOOL GRADU-ATE | MARRIED WITHOUT CHILDREN | RENTED | 26-35 | OTH-ERS | 10,001-100,000 | 10,001-100,000 | 10,001-100,000 | 10,001-100,000 |
| ... | ... | ... | ... | ... | ... | ... | ... | ... | ... | ... | ... | ... | ... | ... | ... |

EP 4 756 667 A1

# FIG.3

1a

EVEN WHEN APPLICANT IS A FEMALE WHO IS UNMARRIED AND SEEKING A JOB, IN A CASE WHERE
SHE HAS A LARGE DEPOSIT, HER LOAN IS TO BE ADOPTED.

2a

CAN BE EXPRESSED BY
EXISTING ATTRIBUTES

OPINION WITH
LOW AMBIGUITY

1b

EVEN WHEN EMPLOYMENT TYPE IS NON-REGULAR, IN A CASE WHERE APPLICANT HAS
A STABLE INCOME, APPLICANT IS TO PASS EXAMINATION.

2b

CANNOT BE EXPRESSED
BY EXISTING ATTRIBUTES

CAN BE EXPRESSED BY
EXISTING ATTRIBUTES

1c

PLEASE CONSIDER NOT ONLY APPLICANT'S AGE BUT ALSO THEIR LIVING SITUATION.

2c

CAN BE EXPRESSED BY
EXISTING ATTRIBUTES

CANNOT BE EXPRESSED
BY EXISTING ATTRIBUTES

1d

EVEN WHEN APPLICANT HAS A HISTORY OF LOAN DELINQUENCY, IN A CASE WHERE AN
IMPROVEMENT IS SEEN, IMPROVEMENT IS TO BE TAKEN INTO ACCOUNT IN EVALUATION.

2d

CANNOT BE EXPRESSED
BY EXISTING ATTRIBUTES

OPINION WITH
HIGH AMBIGUITY

EP 4 756 667 A1

# FIG.4

```
                    ┌─────────────┐
                    │    START    │
                    └─────────────┘
                           │
                           ▼                    ⟋S10
        ┌──────────────────────────────────────┐
        │         TOKENIZATION PROCESS          │
        └──────────────────────────────────────┘
                           │
                           ▼                    ⟋S11
        ┌──────────────────────────────────────┐
        │ GENERATE PROMPT INDICATING RELATIONSHIP│
        │      BETWEEN TOKEN AND ATTRIBUTE      │
        └──────────────────────────────────────┘
                           │
                           ▼                    ⟋S12
        ┌──────────────────────────────────────┐
        │      CALCULATE PROBABILITY THAT TOKEN │
        │  CORRESPONDS TO ATTRIBUTE BY USING LLM│
        └──────────────────────────────────────┘
                           │
                           ▼                    ⟋S13
        ┌──────────────────────────────────────┐
        │       SELECT ONE UNSELECTED TOKEN     │
        └──────────────────────────────────────┘
                           │
                           ▼                    ⟋S14
        ┌──────────────────────────────────────┐
        │    ACQUIRE ATTRIBUTE OF MAXIMUM       │
        │            PROBABILITY                │
        └──────────────────────────────────────┘
                           │
                           ▼              ⟋S15
              ◇ MAXIMUM                        NO
              PROBABILITY IS THRESHOLD VALUE ────────┐
                 OR MORE? ◇                          │
                           │ YES                     │
                           ▼              ⟋S16       │
        ┌──────────────────────────────────────┐    │
        │  ADD ATTRIBUTE TO "ATTRIBUTE OF WHICH │    │
        │ CORRESPONDING PROBABILITY IS THRESHOLD│    │
        │           VALUE OR MORE"              │    │
        └──────────────────────────────────────┘    │
                           │◄────────────────────────┘
                           ▼              ⟋S17
         NO      ◇ ALL TOKENS ARE SELECTED? ◇
        ┌────────◄                           
        │                  │ YES
        │                  ▼
        │           ┌─────────────┐
        │           │     END     │
        │           └─────────────┘
```

# FIG.5

2c

"text": ["PLEASE CONSIDER NOT ONLY APPLICANT'S AGE BUT ALSO THEIR LIVING SITUATION."]

3

"tokens": ["APPLICANT", "AGE", "LIVING SITUATION", "CONSIDER"]

## FIG.6

| ATTRIBUTE / TOKEN | HOUSING TYPE | FAMILY COMPOSI-TION | EMPLOY-MENT STATUS | INCOME | AGE | EXPENDITURE AMOUNT FROM ONE MONTH AGO | EXPENDITURE AMOUNT FROM TWO MONTHS AGO | CLAIM AMOUNT FROM ONE MONTH AGO | CLAIM AMOUNT FROM TWO MONTHS AGO | ... |
|---|---|---|---|---|---|---|---|---|---|---|
| APPLICATION | 0.10 | 0.00 | 0.00 | 0.20 | 0.00 | 0.00 | 0.00 | 0.00 | 0.00 | ... |
| AGE | 0.00 | 0.00 | 0.00 | 0.00 | 0.98 | 0.00 | 0.00 | 0.00 | 0.00 | ... |
| LIVING SITUATION | 0.82 | 0.79 | 0.63 | 0.62 | 0.58 | 0.58 | 0.57 | 0.53 | 0.52 | ... |
| CONSIDER | 0.00 | 0.00 | 0.01 | 0.00 | 0.00 | 0.00 | 0.00 | 0.00 | 0.00 | ... |

15

EP 4 756 667 A1

# FIG.7

15

| ATTRIBUTE / TOKEN | HOUSING TYPE | FAMILY COMPOSITION | EMPLOYMENT STATUS | INCOME | AGE | EXPENDITURE AMOUNT FROM ONE MONTH AGO | EXPENDITURE AMOUNT FROM TWO MONTHS AGO | CLAIM AMOUNT FROM ONE MONTH AGO | CLAIM AMOUNT FROM TWO MONTHS AGO | ... |
|---|---|---|---|---|---|---|---|---|---|---|
| APPLICATION | 0.10 | 0.00 | 0.00 | 0.20 | 0.00 | 0.00 | 0.00 | 0.00 | 0.00 | ... |
| AGE | 0.00 | 0.00 | 0.00 | 0.00 | 0.98 | 0.00 | 0.00 | 0.00 | 0.00 | ... |
| LIVING SITUATION | 0.82 | 0.79 | 0.63 | 0.62 | 0.58 | 0.58 | 0.57 | 0.53 | 0.52 | ... |
| CONSIDER | 0.00 | 0.00 | 0.01 | 0.00 | 0.00 | 0.00 | 0.00 | 0.00 | 0.00 | ... |

15-1

"ATTRIBUTE OF MAXIMUM PROBABILITY" {
 "APPLICANT": {"INCOME": 0.20}, "AGE": {"AGE": 0.98}, "LIVING SITUATION": {"HOUSING TYPE": 0.82}, "CONSIDER": {"EMPLOYMENT STATUS": 0.01}
}

15-2

"ATTRIBUTE OF WHICH CORRESPONDING PROBABILITY IS THRESHOLD VALUE OR MORE" {
 "AGE": {"AGE": 0.98},
 "LIVING SITUATION": {"HOUSING TYPE": 0.82, "FAMILY COMPOSITION": 0.79, "EMPLOYMENT STATUS": 0.63, "INCOME": 0.62, "AGE": 0.58, "EXPENDITURE AMOUNT FROM ONE MONTH AGO": 0.58, "EXPENDITURE AMOUNT FROM TWO MONTHS AGO": 0.57, "CLAIM AMOUNT FROM ONE MONTH AGO": 0.53, "CLAIM AMOUNT FROM TWO MONTHS AGO": 0.52}
}

# FIG.8

```
         ┌─────────────┐
         │    START    │
         └──────┬──────┘
                │                              ⌐S20
                ▼
┌───────────────────────────────────────────┐
│ COUNT NUMBER OF ATTRIBUTES RELATED TO      │
│              EACH TOKEN                     │
└───────────────────┬───────────────────────┘
                    │                          ⌐S21
                    ▼
┌───────────────────────────────────────────┐
│ SPECIFY TOKEN HAVING MAXIMUM NUMBER OF     │
│           RELATED ATTRIBUTES               │
└───────────────────┬───────────────────────┘
       ┌────────────▼────────────────────────┐   ⌐S22
       │     SELECT ONE UNSELECTED TOKEN      │
       └────────────┬────────────────────────┘
                    │                          ⌐S23
                    ▼
┌───────────────────────────────────────────┐
│ CALCULATE WEIGHT OF AMBIGUITY OF TOKEN     │
└───────────────────┬───────────────────────┘
                    │                          ⌐S24
          NO        ▼
     ◄────────< ALL TOKENS ARE SELECTED? >
                    │ YES
                    ▼                          ⌐S25
┌───────────────────────────────────────────┐
│ CALCULATE AMBIGUITY SCORE OF OPINION       │
└───────────────────┬───────────────────────┘
                    ▼
            ┌───────────────┐
            │      END      │
            └───────────────┘
```

# FIG.9

```
                    ┌─────────────┐
                    │    START    │
                    └─────────────┘
                           │
                           ▼
                        ╱─────╲  ⟋S30
            ╱─────────────────────────────╲
          ╱       AMBIGUITY                  ╲        NO
         ⟨ SCORE OF OPINION IS THRESHOLD      ⟩──────────┐
          ╲       VALUE OR MORE?             ╱           │
            ╲─────────────────────────────╱              │
                           │                             │
                          YES                            │
                           │              ⟋S31           │
    ┌──────────────────────────────────────────────┐     │
    │  PERFORM ADDITIONAL QUESTION AND SPECIFY      │     │
    │  ATTRIBUTE RELATED TO OPINION AND             │     │
    │  ATTRIBUTE NOT RELATED TO OPINION             │     │
    └──────────────────────────────────────────────┘     │
                           │              ⟋S32           │
    ┌──────────────────────────────────────────────┐     │
    │  ASSIGN VALUE OF "0.00" TO "ATTRIBUTE         │     │
    │  RELATED TO OPINION"                          │     │
    └──────────────────────────────────────────────┘     │
                           │              ⟋S33           │
    ┌──────────────────────────────────────────────┐     │
    │  EXCLUDE "ATTRIBUTE NOT RELATED TO            │     │
    │  OPINION"                                     │     │
    └──────────────────────────────────────────────┘     │
                           │              ⟋S34           │
    ┌──────────────────────────────────────────────┐     │
    │  STORE ATTRIBUTE RELATED TO OPINION           │     │
    └──────────────────────────────────────────────┘     │
                           │              ⟋S35           │
    ┌──────────────────────────────────────────────┐     │
    │  UPDATE WEIGHT OF AMBIGUITY BY USING          │     │
    │  ATTRIBUTE RELATED TO OPINION                 │     │
    └──────────────────────────────────────────────┘     │
                           │              ⟋S36           │
    ┌──────────────────────────────────────────────┐     │
    │  CALCULATE AMBIGUITY SCORE OF OPINION         │     │
    └──────────────────────────────────────────────┘     ▼
                                                   ┌─────────────┐
                                                   │     END     │
                                                   └─────────────┘
```

# FIG.10

15-2

"ATTRIBUTE OF WHICH CORRESPONDING PROBABILITY IS THRESHOLD VALUE OR MORE" {
    "AGE": {"AGE": 0.98}
    "LIVING SITUATION": {"HOUSING TYPE": 0.82, "FAMILY COMPOSITION": 0.79, "EMPLOYMENT STATUS": 0.63, "INCOME": 0.62, "AGE": 0.58,
"EXPENDITURE AMOUNT FROM ONE MONTH AGO": 0.58, "EXPENDITURE AMOUNT FROM TWO MONTHS AGO": 0.57, "CLAIM AMOUNT FROM
ONE MONTH AGO": 0.53, "CLAIM AMOUNT FROM TWO MONTHS AGO": 0.52}
}

15-3

"ATTRIBUTE RELATED TO OPINION" {
    "AGE": {"AGE": 0.00},
    "LIVING SITUATION": {"HOUSING TYPE": 0.00, "FAMILY COMPOSITION": 0.00, "EMPLOYMENT STATUS": 0.00, "INCOME": 0.00, "AGE": 0.00,
                        "EXPENDITURE AMOUNT FROM ONE MONTH AGO": 0.00, "EXPENDITURE AMOUNT FROM TWO MONTHS AGO": 0.00}
}

# FIG.11

```
        ┌─────────────┐
        │    START    │
        └──────┬──────┘
               │
               ▼                              ⌐S40
┌──────────────────────────────────────────────┐
│  INQUIRE ABOUT VALUE OF ATTRIBUTE THAT         │
│         MATCHES WITH OPINION                    │
└──────────────────┬─────────────────────────────┘
                   │                          ⌐S41
                   ▼
┌──────────────────────────────────────────────┐
│        ACQUIRE ANSWER TO QUESTION              │
└──────────────────┬─────────────────────────────┘
                   │                          ⌐S42
                   ▼
┌──────────────────────────────────────────────┐
│  SET LABEL IN TRAINING DATA SET BASED ON       │
│           ANSWER OF QUESTION                    │
└──────────────────┬─────────────────────────────┘
                   │
                   ▼
        ┌─────────────┐
        │     END     │
        └─────────────┘
```

FIG.12

141

| ID | LOAN ADOPT-ABILITY/ NON-ADOPT-ABILITY | IN-VEST-MENT | SAV-ING | IN-COME | EMPLOY-MENT STATUS | OCCU-PATION | EDUCA-TION LEVEL | FAMILY COMPOSI-TION | HOUS-ING TYPE | AGE | GEN-DER | CLAIM AMOUNT FROM ONE MONTH AGO | CLAIM AMOUNT FROM TWO MONTHS AGO | EXPENDI-TURE AMOUNT FROM ONE MONTH AGO | EXPENDI-TURE AMOUNT FROM TWO MONTHS AGO | SELECT-ABLE/ NON-SELECT-ABLE LABEL DESIRED BY USER |
|---|---|---|---|---|---|---|---|---|---|---|---|---|---|---|---|---|
| 1 | ADOPT-ABLE | EXIST | EX-IST | HIGH | **REGU-LAR EM-PLOYEE** | COM-PANY EM-PLOYEE | UNIVER-SITY GRADU-ATE | **MARRIED WITH CHILDREN** | **OWNED** | **36-45** | MALE | 100,001-200,000 | 100,001-200,000 | **200,001-300,000** | **200,001-300,000** | 1 |
| 2 | NON-ADOPT-ABLE | NOT EXIST | NOT EX-IST | LOW | PART-TIMER | UN-EM-PLOYED | MIDDLE SCHOOL GRADU-ATE | UNMAR-RIED | RENTED | 26-35 | FE-MALE | 10,001-100,000 | 10,001-100,000 | 10,001-100,000 | 10,001-100,000 | 0 |
| 3 | ADOPT-ABLE | EXIST | NOT EX-IST | ME-DIUM | SELF-EM-PLOYED | SELF-EM-PLOYED | COL-LEGE GRADU-ATE | MARRIED WITHOUT CHILDREN | RENTED | 26-35 | MALE | 10,001-100,000 | 10,001-100,000 | 100,001-200,000 | 100,001-200,000 | 0 |
| 4 | ADOPT-ABLE | EXIST | EX-IST | HIGH | **SELF-EM-PLOYED** | SELF-EM-PLOYED | UNIVER-SITY GRADU-ATE | **MARRIED WITH CHILDREN** | **OWNED** | **36-45** | MALE | 100,001-200,000 | 100,001-200,000 | **200,001-300,000** | **200,001-300,000** | 1 |
| 5 | NON-ADOPT-ABLE | NOT EXIST | NOT EX-IST | ME-DIUM | PART-TIMER | STU-DENT | HIGH SCHOOL GRADU-ATE | MARRIED WITHOUT CHILDREN | RENTED | 26-35 | OTH-ERS | 10,001-100,000 | 10,001-100,000 | 10,001-100,000 | 10,001-100,000 | 0 |
| ... | ... | ... | ... | ... | ... | ... | ... | ... | ... | ... | ... | ... | ... | ... | ... | ... |

EP 4 756 667 A1

## FIG.13

INFORMATION PROCESSING APPARATUS ⟋100

CONTROL UNIT ⟋150

STORAGE UNIT ⟋140

COMMUNICATION UNIT ⟋110

LLM ⟋151

TRAINING DATA SET ⟋141

INPUT UNIT ⟋120

SPECIFYING UNIT ⟋152

MACHINE LEARNING MODEL ⟋142

DISPLAY UNIT ⟋130

TRAINING UNIT ⟋153

# FIG.14

START

S101
START INTERACTION BETWEEN USER AND LLM

S102
ACQUIRE USER'S OPINION

S103
EXECUTE MAPPING PROCESS

S104
EXECUTE AMBIGUITY SCORE CALCULATION PROCESS

S105
EXECUTE ADDITIONAL QUESTION PROCESS

S106
EXECUTE LABEL SPECIFYING PROCESS

S107
TRAIN MACHINE LEARNING MODEL BASED ON TRAINING DATA SET

END

# FIG.15

COMPUTER 200

| CPU 201 | INPUT DEVICE 202 | DISPLAY 203 | COMMUNICATION DEVICE 204 | INTERFACE DEVICE 205 |

208 BUS

RAM 206

LLM PROCESS 206a

SPECIFYING PROCESS 206b

TRAINING PROCESS 206c

HARD DISK DEVICE 207

LLM PROGRAM 207a

SPECIFYING PROGRAM 207b

TRAINING PROGRAM 207c

EP 4 756 667 A1

# FIG.16

|  | PREDICTED VALUE OF AI "ADOPTABLE" (Positive) | PREDICTED VALUE OF AI "NON-ADOPTABLE" (Negative) |
|---|---|---|
| TRUE VALUE "ADOPTABLE" (Positive) | TRUE POSITIVE (TP) | FALSE NEGATIVE (FN) |
| TRUE VALUE "NON-ADOPTABLE" (Negative) | FALSE POSITIVE (FP) | TRUE NEGATIVE (TN) |

## EUROPEAN SEARCH REPORT

**Application Number**

EP 25 21 9665

Europäisches
Patentamt
European
Patent Office
Office européen
des brevets

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 12 111 754 B1 (MYSORE VISHAL [CA] ET AL) 8 October 2024 (2024-10-08)<br>* abstract *<br>* column 1, lines 1-32 *<br>* column 3, line 60 - column 5, line 47 *<br>* column 6, line 7 - column 7, line 3; figure 1 *<br>* column 7, lines 16-43 *<br>* column 10, line 13 - column 11, line 37; figure 3 *<br>* column 12, lines 19-48; figure 4 *<br>* column 12, line 61 - column 13, line 18 *<br>* column 13, line 34 - column 14, line 31; figure 5 *<br>* column 14, line 42 - column 18, line 60; figure 6 *<br>* column 21, line 31 - column 23, line 28; figure 7 *<br>* column 23, lines 29-46 *<br>* column 24, line 5 - column 25, line 9 *<br>* column 25, lines 30-54; figure 8 *<br>* column 26, lines 15-33 *<br>----- | 1-15 | INV.<br>G06F40/284<br>G06F40/35<br>G06N3/02<br>G06N3/08<br><br>ADD.<br>G06F40/268<br>G06F40/216 |
| | | | **TECHNICAL FIELDS SEARCHED (IPC)**<br><br>G06F<br>G06E<br>G06N |

The present search report has been drawn up for all claims

| Place of search | Date of completion of the search | Examiner |
|---|---|---|
| Berlin | 21 April 2026 | Chéron, Laurent |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 21 9665

This annex lists the patent family members relating to the patent documents cited in the above-mentioned European search report.
The members are as contained in the European Patent Office EDP file on
The European Patent Office is in no way liable for these particulars which are merely given for the purpose of information.

21-04-2026

| Patent document cited in search report | | Publication date | Patent family member(s) | | Publication date |
|---|---|---|---|---|---|
| US 12111754 | B1 | 08-10-2024 | US | 12111754 B1 | 08-10-2024 |
| | | | US | 2025321866 A1 | 16-10-2025 |
| | | | WO | 2025221872 A1 | 23-10-2025 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024508502 A
- JP 2023162816 A
- US 20190220705